# EUROPEAN PATENT SPECIFICATION

(11) **EP 2 050 634 B1**
(45) Date of publication and mention of the grant of the patent: **06.07.2011**
(21) Application number: 08164314.0
(22) Date of filing: 15.09.2008
(51) Int. Cl.: B60R 21/34, B60R 21/213

(54) **Airbag apparatus**
Airbag-Vorrichtung
Dispositif d'airbag

(30) Priority: 16.10.2007 JP 2007268682
(43) Date of publication of application: 22.04.2009
(73) Proprietor: TAKATA CORPORATION, Minato-ku, Tokyo 106-8510 (JP)
(72) Inventor: Takimoto, Takayuki, Tokyo 106-8510 (JP); Nakamura, Atsushi, Tokyo 106-8510 (JP); Kobayashi, Yoshihiro, Tokyo 106-8510 (JP); Yamada, Takahiro, Tokyo 106-8510 (JP)
(74) Representative: Vossius & Partner

(56) References cited:
- EP-A1- 1 479 574
- EP-B1- 1 373 031
- US-A1- 2007 023 223

## Description

The present invention belongs to the technical field of an airbag apparatus that is inflated and developed outside a vehicle by gas from an inflator in an emergency such as a collision of the vehicle with an object for cushioning the shock applied to the object and the vehicle.

There are apparatuses that inflate an airbag outside the pillar portion of a vehicle at the time of a collision between the vehicle and, for example, a pedestrian to cushion the shock when the pedestrian re-collides with the vehicle.

For example, there is disclosed an airbag apparatus in which, when an airbag body is inflated in front of the upper part of a front pillar, a cover is developed outward in the direction of the width of the vehicle, and the airbag body is inflated inward in the direction of the width of the vehicle and held at the inflating position, and thereby the shock cushioning performance is improved (see JP-A-2002-283939) .

In addition, there is disclosed an airbag apparatus in which a cloth forming an airbag has portions different in elastic coefficient (see JP-A-2004-196132).

However, in the airbag apparatus described in JP-A-2002-283939, it is necessary to provide a member that restrains the shape of the bag against the inflation in the direction of the width of the vehicle. This increases the number of components and therefore the cost.

The airbag apparatus described in JP-A-2004-196 132 relates to a saddle riding-type vehicle. In this case, the structure of an airbag used in an elongated portion such as a front pillar is not described.

EP 1 373 031 B1 discloses an airbag apparatus for pedestrian protection according to the preamble of claim 1.

The present invention is made in view of the above situation, and an object thereof is to provide an airbag apparatus that inflates in a stable state and thereby catches, for example, a pedestrian appropriately and softly.

This object is achieved with the features of claim 1.

According to the airbag apparatus of the present invention, the airbag has a substantially tubular shape, and stretches in the circumferential direction and contracts in the longitudinal direction when inflating compared to before the inflation. Therefore, before the inflation, the airbag can be housed in a thin state in the direction of the width of the vehicle in a small space. After the inflation, the airbag extends in the direction of the width of the vehicle, and therefore the shock-absorbing area can be extended.

In addition, the base cloth of the airbag is made of a grid consisting of first yarns and second yarns intersecting with each other, and the grid consisting of the first yarns and the second yarns is inclined at about 45 degrees to the longitudinal direction of the airbag. Therefore, the extension in the direction of the width of the vehicle can be maximized.

The embodiments of the present invention will now be described with reference to the drawings.
FIG. 1 shows an embodiment of an airbag according to the present invention;
FIG. 2 is an enlarged view of part of the airbag of this embodiment;
FIG. 3 shows the airbag of this embodiment in its inflated state;
FIG. 4 is a sectional view taken along line a-a of FIG. 3;
FIG. 5 is an enlarged view of part of the airbag of FIG. 3;
FIG. 6 is a perspective view of a vehicle equipped with an airbag apparatus of this embodiment;
FIG. 7 is a perspective view of a front pillar of a vehicle of this embodiment and its vicinity;
FIG. 8 is a sectional view taken along line b-b of FIG. 7;
FIG. 9 shows the operation of the airbag apparatus 10 of this embodiment;
FIG. 10 is a perspective view of the front pillar and its vicinity in the completion stage of inflation of the airbag of this embodiment;
FIG. 11 is a sectional view taken along line c-c of FIG. 10; and
FIG. 12 is an enlarged view of a through anchor and its vicinity in the completion stage of inflation of the airbag of this embodiment.

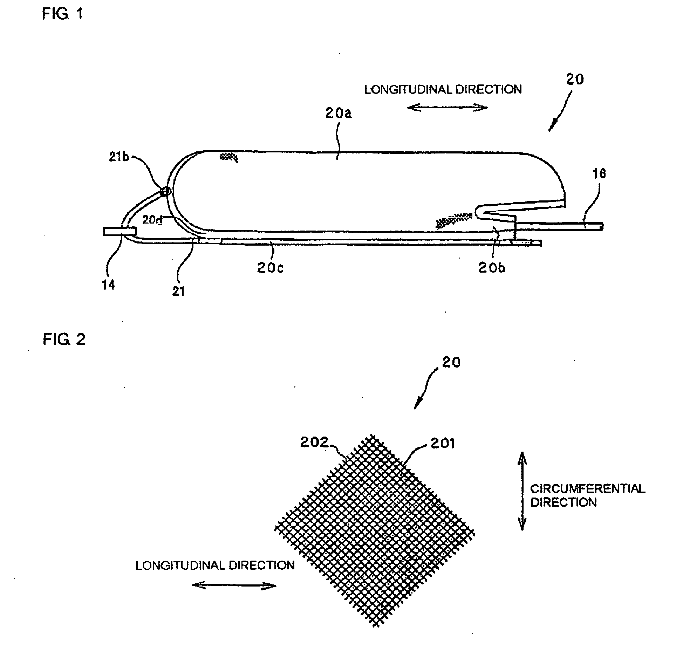

FIG. 1 shows an airbag 20 of this embodiment. The airbag 20 of this embodiment is formed by folding and sewing a single base cloth, and includes a main inflating portion 20a, a pipe connecting portion 20b, and tubular portions 20c as examples of inserting portion. The main inflating portion 20a has a substantially elliptical shape. When inflated, the main inflating portion 20a cushions the shock to a collision object such as a pedestrian. The pipe connecting portion 20b protrudes from the main inflating portion 20a. A pipe 16 is inserted into the pipe connecting portion 20b, and then the pipe connecting portion 20b is caulked. The tubular portions 20c are located on the opposite side of the airbag 20 from the shock absorbing side. The tubular portions 20c are formed in a tubular shape so that a below-described developing position limiting means 21 can be inserted. The tubular portions 20c are preferably provided at least on the vehicle side 20d of the main inflating portion 20a and at the pipe connecting portion 20b so that the position can be limited throughout the length of the airbag 20.

FIG. 2 is an enlarged view of part of the airbag 20. As shown in FIG. 2, in the base cloth of the airbag 20, the grid consisting of the first yarns 201 and the second yarns 202 is inclined at about 45 degrees to the longitudinal direction. The term "longitudinal direction" means the direction of the length of the airbag 20, and is not limited to the direction of the greatest length but includes some slight inclination.

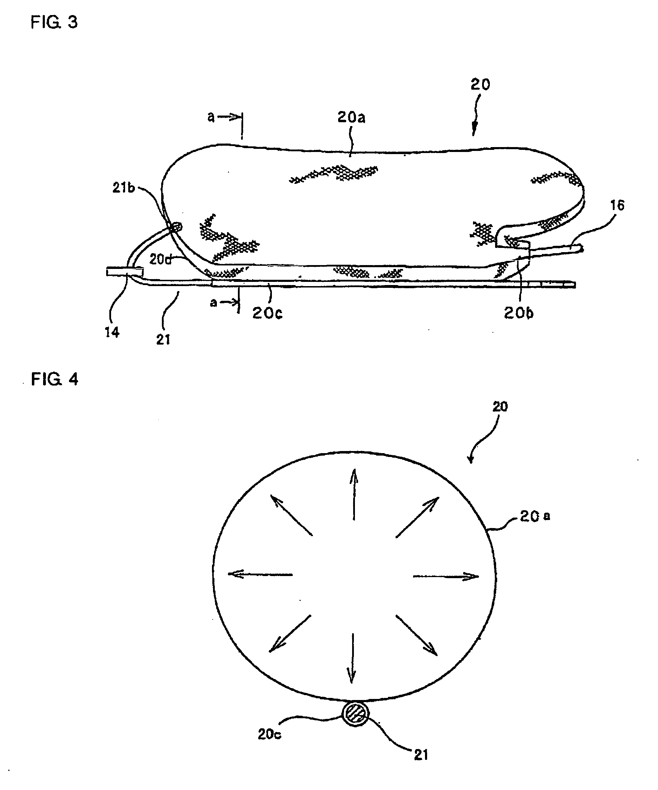

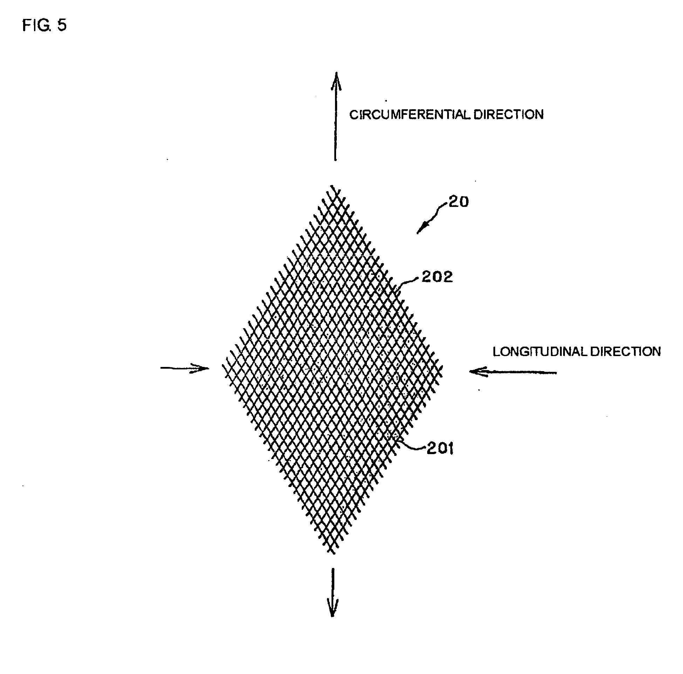

Next, the airbag 20 having such a structure in its inflated condition will be shown. FIG. 3 shows the airbag 20 in its inflated state. FIG. 4 is a sectional view taken along line a-a of FIG. 3. FIG. 5 is an enlarged view of part of the air bag 20 in its inflated state.

When the airbag 20 inflates, as shown in FIG. 4, part of the main inflating portion 20a near the pipe connecting portion 20b inflates first, in the circumferential direction. At this time, the grid consisting of the first yarns 201 and the second yarns 202 of the airbag 20 is deformed, as shown in FIG. 5, so as to stretch in the circumferential direction and contract in the longitudinal direction. Therefore, the whole airbag 20 inflates, as shown in FIG. 3, so as to contract in the longitudinal direction and stretch in the circumferential direction.

Inclining the grid at about 45 degrees to the longitudinal direction makes the diameter at the time of inflation about 10% larger compared to the case where the grid is at zero degrees. Therefore, the use of the base cloth can be reduced by about 10%, and therefore the cost can be reduced. In addition, the airbag can be efficiently housed in a narrow space such as a space in a front pillar because the airbag inflates widely.

In this embodiment, a below-described developing position limiting means 21 is passed through the tubular portions 20c of the airbag 20. To allow the airbag 20 to stretch in the circumferential direction and contract in the longitudinal direction during inflation, the airbag 20 and the developing position limiting means 21 are not firmly fixed to each other.

Next, a state where an airbag apparatus 10 including the airbag 20 is installed in a vehicle 1 will be described.

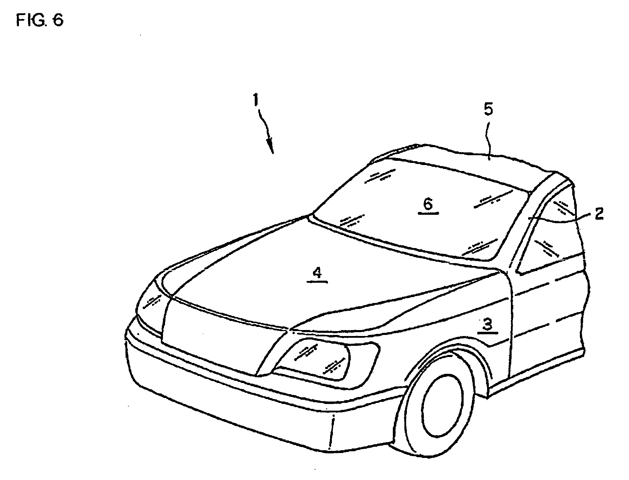

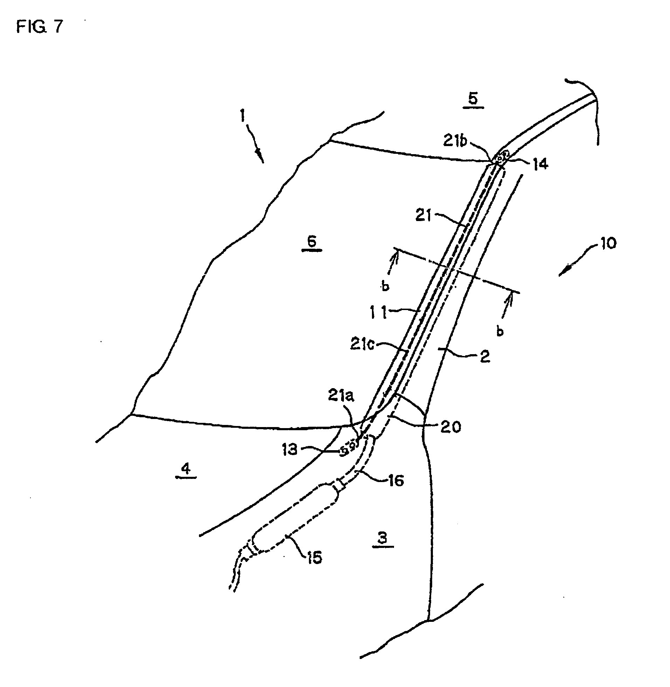

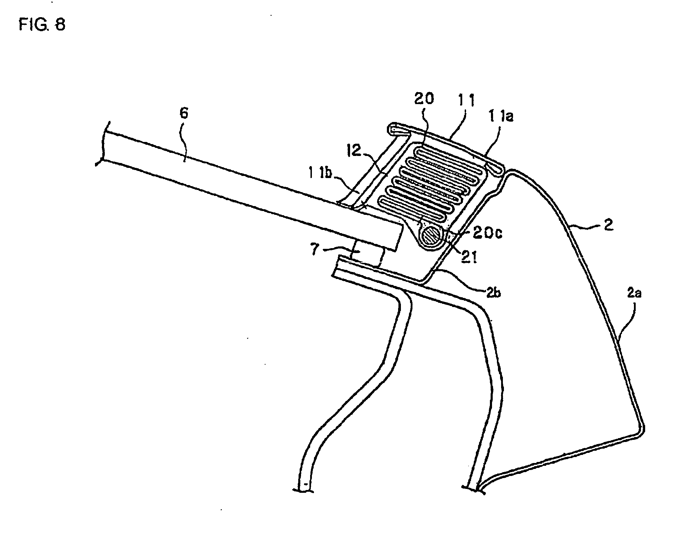

FIG. 6 is a perspective view of a vehicle equipped with an airbag apparatus of this embodiment. FIG. 7 is a perspective view of a front pillar of a vehicle of this embodiment and its vicinity. FIG. 8 is a sectional view taken along line b-b of FIG. 7.

In the figures, reference numeral 1 denotes a vehicle, reference numeral 2 denotes a front pillar, reference numeral 3 denotes a fender, reference numeral 4 denotes a hood, reference numeral 5 denotes a roof, reference numeral 6 denotes a windshield, reference numeral 7 denotes a seal, reference numeral 10 denotes an airbag apparatus, reference numeral 11 denotes a cover, reference numeral 12 denotes a bag case, reference numeral 13 denotes an anchor, reference numeral 14 denotes a through anchor, reference numeral 15 denotes a gas generator, reference numeral 16 denotes a pipe, reference numeral 20 denotes an airbag, and reference numeral 21 denotes a developing position limiting means.

A vehicle 1 has front pillars 2 that connect a member (not shown) or an engine room frame (not shown) and a roof 5. In addition, the vehicle 1 has a windshield 6 surrounded by a hood 4, the roof 5, and the front pillars 2 and attached using a seal 7.

An airbag apparatus 10 is housed in the windshield 6 side of the front pillar 2 and the fender 3 on each side. The front pillar 2 has a first surface 2a that faces the outside of the vehicle 1 and a second surface 2b that faces the windshield. On the second surface 2b side, an airbag 20 is folded and housed in a bag case 12 together with a developing position limiting means 21, and housed in a cover 11.

The cover 11 has a substantially L-shaped cross-sectional shape and includes an upper cover 11a and a side cover 11b, and is disposed so as to hide the airbag 20 folded on the second surface 2b side of the front pillar 2. The folded airbag 20 may be directly housed in the cover 11 without being housed in the bag case 12.

The developing position limiting means 21 is a string-like or belt-like member. One end 21a thereof is engaged with part of the vehicle body such as the base portion of the front pillar 2 by the anchor 13. The other end 21b thereof is passed through an insertion hole 14a of the through anchor 14 and is engaged with the air bag 20 by sewing or adhesion. For example, it is preferable to engage the other end 21b with a portion having an insertion hole provided in the airbag 20. The middle portion 21c thereof is passed through a tubular portion 20c formed in the airbag 20, for example, by sewing.

The one end 21a may be engaged with a gas generator 15 or the airbag 20. The through anchor 14 may have a smooth structure having, for example, a guide or a pulley so that friction does not significantly affect the developing position limiting means 21. Although, in this embodiment, the tubular portion 20c is provided substantially throughout the length of the airbag 20 along the front pillar 2, a plurality of tubular portions 20c may be provided at intervals. The tubular portions 20c are preferably provided near the ends of the airbag 20 so that the airbag 20 becomes more stable.

Under the fender 3 or the hood 4, a gas generator 15 that generates gas to inflate the airbag 20 and a pipe 16 that supplies the gas generated in the gas generator 15 to the airbag 20 are housed.

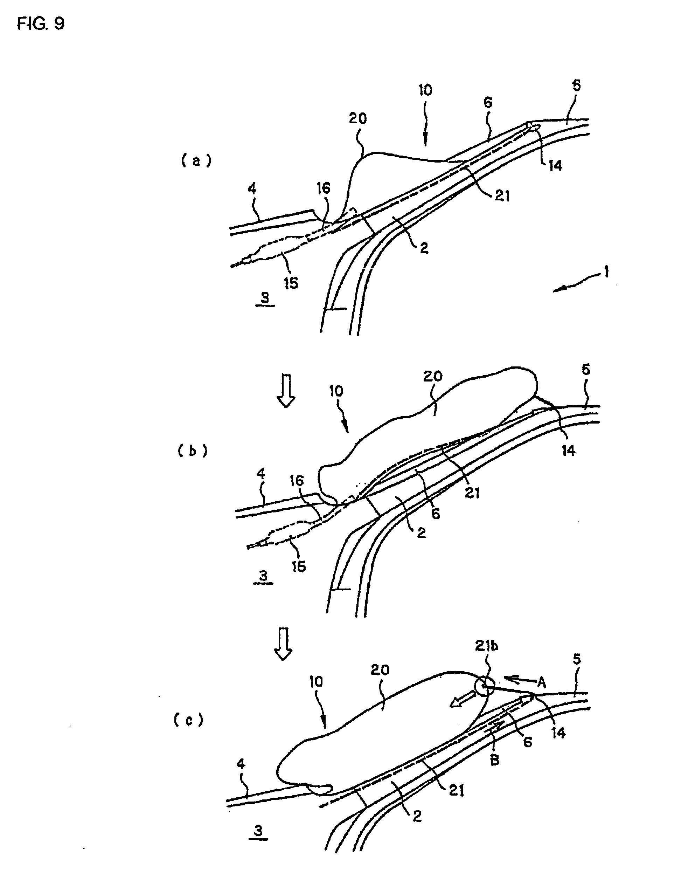

Next, the operation of the airbag apparatus 10 of this embodiment will be described. FIG. 9 shows the operation of the airbag apparatus 10 of this embodiment.

The airbag apparatus 10 in its housed state shown in FIG. 7 is activated when the vehicle 1 collides with an object (not shown) and a detecting means (not shown) detects the impact force applied to the vehicle 1, on the basis of the detection signal, for example, by a control means.

FIG. 9 shows an early stage of inflation in which the airbag apparatus 10 starts operation, gas flows from the gas generator 15 housed in the fender 3 through the pipe 16 into the airbag 20, and the airbag 20 starts to inflate. In the early stage of inflation, the fender 3 side of the airbag 20 inflates first, and the cover 11 shown in FIGS. 7 and 8 opens due to the inflation pressure.

FIG. 9(b) shows a middle stage of inflation in which gas flows from the gas generator 15 through the pipe 16 into the airbag 20, and the airbag 20 continues to inflate. In the middle stage of inflation, the entire airbag 20 is completely exposed outside from its folded state. At this time, no tension is applied to the developing position limiting means 21, and the inflation of the airbag 20 is continued.

FIG. 9(c) shows a completion stage of inflation in which the inflation of the airbag 20 is completed. In the completion stage of inflation, the airbag 20 is completely inflated. The state of the airbag apparatus 10 in the completion stage of inflation will be described.

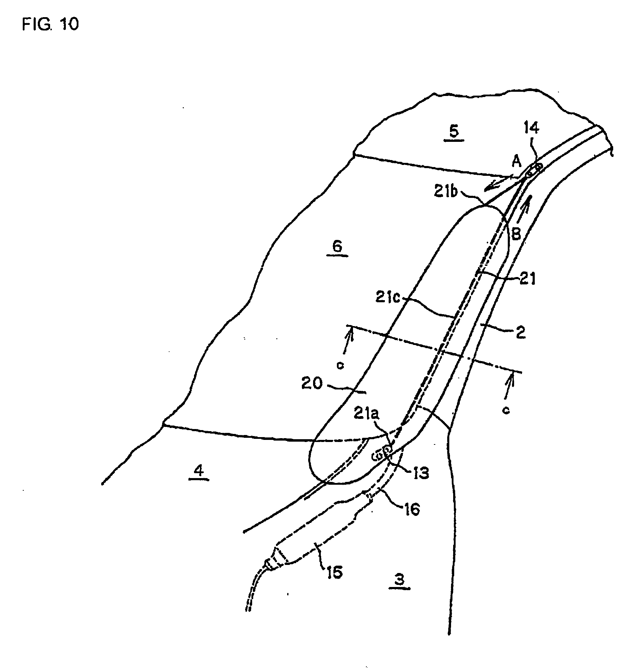

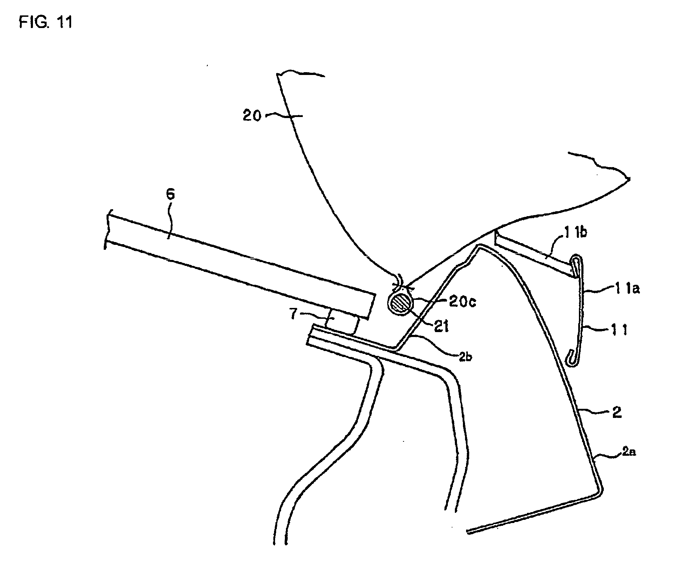

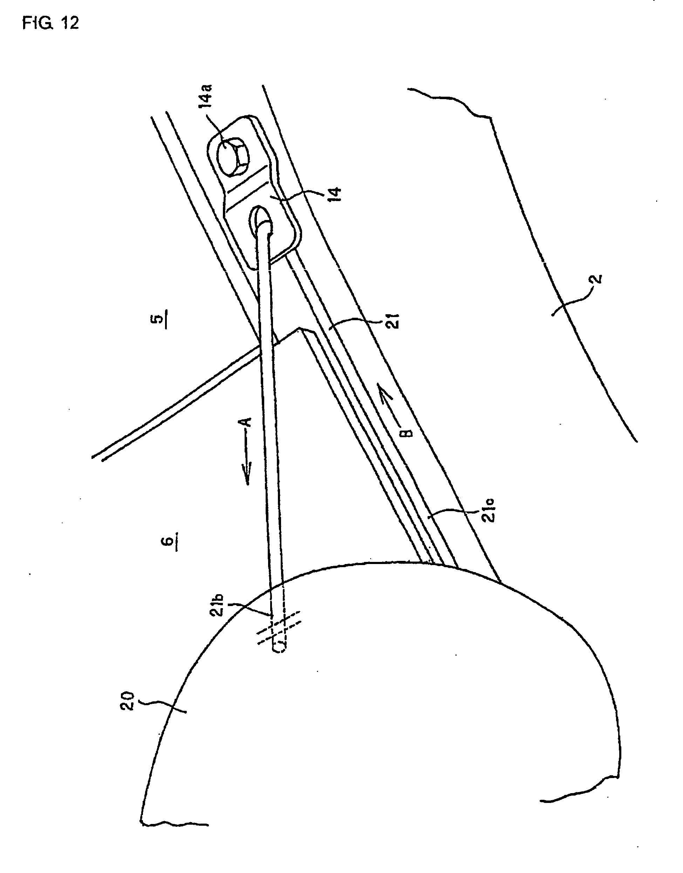

FIG. 10 is a perspective view of the front pillar 2 and its vicinity in the completion stage of inflation. FIG. 11 is a sectional view taken along line b-b of FIG. 10. FIG. 12 is an enlarged view of the through anchor 14 and its vicinity.

In the completion stage of inflation, the airbag 20 develops above parts of the fender 3 and the hood 4 and in front of the front pillar 2, in the direction along the front pillar 2.

At this time, the other end 21b of the developing position limiting means 21 engaged with the airbag 20 is pulled in response to the inflation of the airbag 20, as shown by arrow A, away from the roof 5. Therefore, relative to the through anchor 14, the middle portion 21c of the developing position limiting means 21 is pulled, as shown by arrow B, toward the roof 5, and is pressed against the windshield 6 and the front pillar 2. As shown in FIG. 10, the airbag 20 through which the developing position limiting means 21 is passed is also pressed against the windshield 6 and the front pillar 2.

It is possible to provide a plurality of developing position limiting means 21. The form of the developing position limiting means 21 is not limited to this embodiment but any other form can be taken as long as it presses the airbag 20 against the windshield 6 and the front pillar 2 when the airbag 20 inflates.

Although, in this embodiment, the gas generator 15 is housed in the fender 3, the gas generator 15 may be housed in the roof 5. In this case, it is preferable to dispose the anchor 13 in the roof 5 and the through anchor 14 in the fender 3.

As described above, the airbag 20 has a substantially tubular shape, and stretches in the circumferential direction and contracts in the longitudinal direction when inflating compared to before the inflation. Therefore, before the inflation, the airbag can be housed in a thin state in the direction of the width of the vehicle in a small space. After the inflation, the airbag extends in the direction of the width of the vehicle, and therefore the shock-absorbing area can be extended.

In addition, the base cloth of the airbag 20 is made of a grid consisting of first yarns 201 and second yarns 202 intersecting with each other, and the grid consisting of the first yarns 201 and the second yarns 202 is inclined at about 45 degrees to the longitudinal direction of the airbag 20. Therefore, the airbag 20 can widely extend in the direction of the width of the vehicle.

According to the airbag apparatus of the present invention, the airbag has a substantially tubular shape, and stretches in the circumferential direction and contracts in the longitudinal direction when inflating compared to before the inflation. Therefore, before the inflation, the airbag can be housed in a thin state in the direction of the width of the vehicle in a small space. After the inflation, the airbag extends in the direction of the width of the vehicle, and therefore the shock-absorbing area can be extended.

In addition, the base cloth of the airbag is made of a grid consisting of first yarns and second yarns intersecting with each other, and the grid consisting of the first yarns and the second yarns is inclined at about 45 degrees to the longitudinal direction of the airbag. Therefore, the extension in the direction of the width of the vehicle can be maximized.

## Claims

1. An airbag apparatus comprising:
an airbag (20);
an inflator (15) that discharges gas into the airbag (20);
a detecting means that detects a collision; and
a control means that activates the inflator in response to a signal from the detecting means,
wherein the airbag (20) disposed along a front pillar (2) is inflated outside a vehicle (1), and
the airbag (20) has a substantially tubular shape, and stretches in the circumferential direction and contracts in the longitudinal direction when inflating compared to before the inflation,
**characterized in that** the base cloth of the airbag is made of a grid consisting of first yarns (201) and second yarns (202) intersecting with each other, and the grid consisting of the first yarns and the second yarns is inclined at about 45 degrees to the longitudinal direction of the airbag (20).

## Patentansprüche

1. Airbag-Vorrichtung mit
einem Airbag (20),
einer Aufblaseinrichtung (15), die Gas in den Airbag (20) abgibt;
einer Detektoreinrichtung zum Detektieren einer Kollision; und
einer Steuereinrichtung, die die Aufblaseinrichtung als Antwort auf ein Signal von der Detektoreinrichtung aktiviert,
wobei der entlang einer A-Säule (2) angeordnete Airbag (20) außerhalb eines Fahrzeugs (1) aufgeblasen wird, und
der Airbag (20) im Wesentlichen schlauchförmig ist und sich beim Aufblasen in Umfangsrichtung ausdehnt und in Längsrichtung zusammenzieht im Vergleich zum Zustand vor dem Aufblasen,
**dadurch gekennzeichnet, dass** das Basistuch des Airbags aus einem Gitter hergestellt ist, das aus einem ersten Garn (201) und einem zweiten Garn (202) besteht, die einander überschneiden, und dass das aus dem ersten Garn und dem zweiten Garn bestehende Gitter um etwa 45 Grad gegenüber der Längsrichtung des Airbags (20) geneigt ist.

## Revendications

1. Dispositif d'airbag, comprenant :
un airbag (20) ;
un générateur de gaz (15) soufflant un gaz à l'intérieur de l'airbag (20); un moyen de détection destiné à détecter une collision ; et
un moyen de commande activant le générateur de gaz en réponse à un signal du moyen de détection,
où l'airbag (20) disposé le long d'un montant avant (2) est gonflé à l'extérieur d'un véhicule (1), et
où l'airbag (20) a une forme sensiblement tubulaire,
s'étire en direction périphérique et se contracte en direction longitudinale lorsqu'il est gonflé, par rapport à l'état d'avant le gonflage,
**caractérisé**
**en ce que** le tissu de base de l'airbag est constitué d'une trame composée de premiers fils (201) et de deuxièmes fils (202) qui se croisent les uns les autres, et en ce que la trame composée des premiers fils et des deuxièmes fils est inclinée de près de 45 degrés par rapport à la direction longitudinale de l'airbag (20).
